# EUROPÄISCHE PATENTSCHRIFT

(11) **EP 2 005 547 B1**
(45) Veröffentlichungstag und Bekanntmachung des Hinweises auf die Patenterteilung: **03.07.2019**
(21) Anmeldenummer: 07711764.6
(22) Anmeldetag: 03.03.2007
(51) Int. Cl.: H02G 15/013, H02G 15/117, G02B 6/44

(54) **DICHTUNGSKÖRPER EINER KABELMUFFE**
SEALING BODY FOR A CABLE SLEEVE
CORPS D'ÉTANCHÉITÉ D'UN MANCHON DE CÂBLE

(30) Priorität: 11.04.2006 DE 202006006019 U
(43) Veröffentlichungstag der Anmeldung: 24.12.2008
(73) Patentinhaber: Corning Optical Communications LLC, Hickory, NC 28601 (US)
(72) Erfinder: KNORR, Jens, 58791 Werdohl (DE); MÜLLER, Thorsten, 56708 Menden (DE); EICHSTÄDT, Andreas, 58675 Hemer (DE)
(74) Vertreter: Sturm, Christoph
(86) Internationale Anmeldenummer: PCT/EP2007/001840
(87) Internationale Veröffentlichungsnummer: WO 2007/118548

(56) Entgegenhaltungen:
- EP-B1- 1 238 451
- WO-A-00/46895
- WO-A-02/063736
- JP-A- 11 098 671
- JP-A- 11 313 427
- US-A- 4 818 310
- US-A1- 2004 256 138

## Beschreibung

Die Erfindung betrifft einen Dichtungskörper einer Kabelmuffe nach dem Oberbegriff des Anspruchs 1.

Kabelmuffen zur strukturierten Ablage bzw. Handhabung von in Lichtwellenleiterkabeln geführten Lichtwellenleitern werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine entscheidende Rolle zu, damit die Übertragungseigenschaften der Lichtwellenleiter nicht negativ beeinträchtigt werden.

Aus der EP 0 646 294 B1 ist eine Kabelmuffe bekannt, die einen Abdeckkörper sowie einen in eine Öffnung des Abdeckkörpers einführbaren Dichtungskörper aufweist, wobei der Dichtungskörper ein gelartiges Dichtungsmaterial umfasst, welches zwischen zwei formstabilen Platten angeordnet ist. Der Dichtungskörper ist in einem Hohlraum in Axialrichtung nach innen und außen in Bezug auf den Abdeckkörper verschiebbar, um Druckunterschiede zwischen einem Innendruck und Außendruck der Kabelmuffe auszugleichen. Abhängig von diesem Druckunterschied kommt der Dichtungskörper dabei an unterschiedlichen Anschlägen zur Anlage.

Die EP 1 238 451 B1 offenbart einen Dichtungskörper für eine Kabelmuffe, der von mehreren Dichtungskörpersegmenten gebildet ist. Die Dichtungskörpersegmente können über als Rastelemente ausgebildete Verbindungselemente miteinander verbunden werden, wobei zwischen aneinandergrenzenden Dichtungskörpersegmenten mehrere Kabeleinführungsöffnungen ausgebildet sind. Im Bereich der Kabeleinführungsöffnungen sind gelartige Dichtungselemente angeordnet, die unter Abdichten der Kabeleinführungsöffnungen gegen in die Kabeleinführungsöffnungen einlegbare Kabel gedrückt werden können. Gemäß der EP 1 238 451 B1 sind zwischen aneinandergrenzenden Dichtungskörpersegmenten jeweils zwei Kabeleinführungsöffnungen ausgebildet, die über gemeinsame gelartige Dichtungselemente gemeinsam abgedichtet werden.

Ein Dichtungskörper mit den Merkmalen des Oberbegriffs des Patentanspruchs 1 ist aus der WO 02/063736 A bekannt.

WO 00/46895 A, US 2004/256138 A1 und JP 11 098671 A offenbaren weitere Dichtungskörper nach dem Stand der Technik.

Hiervon ausgehend liegt der vorliegenden Erfindung das Problem zu Grunde, einen neuartigen Dichtungskörper einer Kabelmuffe zu schaffen. Dieses Problem wird dadurch gelöst, dass der eingangs genannte Dichtungskörper durch die Merkmale des kennzeichnenden Teils des Anspruchs 1 weitergebildet ist.

Bei dem erfindungsgemäßen Dichtungskörper ist zwischen aneinandergrenzenden Dichtungskörpersegmenten, nämlich zwischen dem mittleren Dichtungskörpersegment und jedem in eine Ausnehmung des mittleren Dichtungskörpersegments einführbaren zylindersegmentartigen Dichtungskörpersegment, jeweils eine Kabeleinführungsöffnung ausgebildet, die der individuellen Abdichtung jeweils eines einzigen Kabels dient.

Zwischen dem mittleren Dichtungskörpersegment und jedem zylindersegmentartigem Dichtungskörpersegment kann demnach jeweils ein Kabel individuell abgedichtet werden, wodurch unterschiedlichen Kabeldurchmessern in idealer Weise bei der Abdichtung derselben Rechnung getragen werden kann.

Das gelartige Dichtungselement jedes zylindersegmentartigen Dichtungskörpersegments wirkt mit jeweils einem gelartigen Dichtungselement des mittleren Dichtungskörpersegments zusammen, welches im Bereich der jeweiligen Ausnehmung des mittleren Dichtungskörpersegments angeordnet ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: einen erfindungsgemäßen Dichtungskörper einer Kabelmuffe in perspektivischer Ansicht,
- Fig. 2:: den erfindungsgemäßen Dichtungskörper gemäß Fig. 1 in teilweiser perspektivischer Explosionsansicht, und
- Fig. 3:: ein zylindersegmentartiges Dichtungskörpersegment des erfindungsgemäßen Dichtungskörpers in Alleindarstellung in perspektivischer Ansicht.

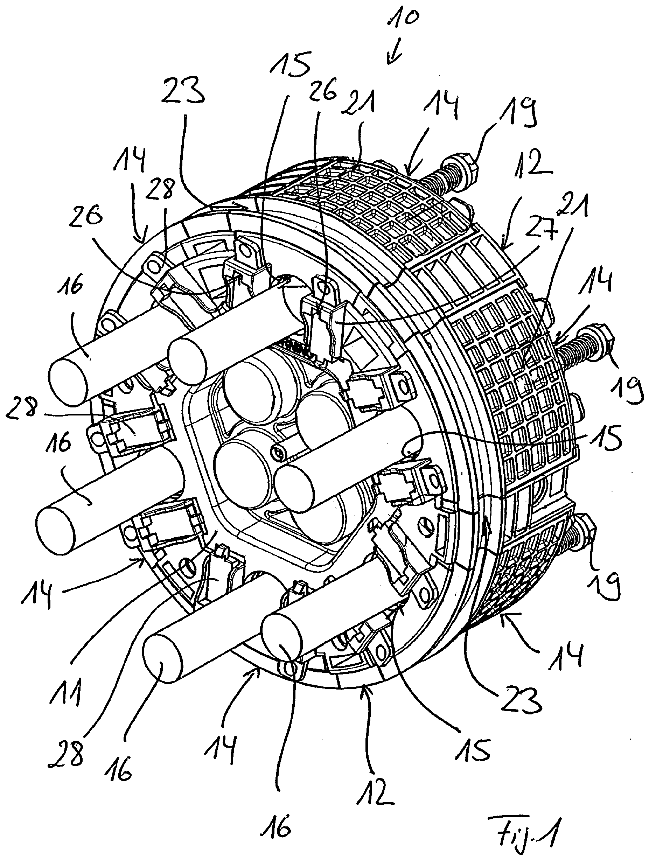

Nachfolgend wird die hier vorliegende Erfindung unter Bezugnahme auf Fig. 1 bis 3 in größerem Detail beschrieben, wobei Fig. 1 ein bevorzugtes Ausführungsbeispiel eines erfindungsgemäßen Dichtungskörpers 10 in zusammengebautem Zustand zeigt.

Der erfindungsgemäße Dichtungskörper 10 verfügt über ein mittleres, zylinderartiges Dichtungskörpersegment 11, welches an einer äußeren Mantelfläche 12 mehrere Ausnehmungen 13 aufweist. Ein Gehäuse des mittleren, zylinderartigen Dichtungskörpersegments 11 ist formstabil. In jede der Ausnehmungen 13 des mittleren Dichtungskörpersegments 11 ist jeweils ein zylindersegmentartiges Dichtungskörpersegment 14 einführbar, wobei zwischen dem mittleren Dichtungskörpersegment und jedem zylindersegmentartigen Dichtungskörpersegment 14 jeweils eine Kabeleinführungsöffnung 15 zur Aufnahme jeweils eines einzigen Kabels 16 ausgebildet ist. Im Bereich jeder der Kabeleinführungsöffnungen 15 kann das von der jeweiligen Kabeleinführungsöffnung 15 aufgenommene Kabel 16 individuell abgedichtet werden.

Im gezeigten Ausführungsbeispiel sind über den Umfang des mittleren Dichtungskörpersegments 11 insgesamt sechs Ausnehmungen 13 zur Aufnahme jeweils eines zylindersegmentartigen Dichtungskörpersegments 14 ausgebildet, wobei die Ausnehmungen 13 über den Umfang des mittleren Dichtungskörpersegments 11 gleichverteilt positioniert sind. Demnach weist der gezeigte Dichtungskörper 10 sechs individuell abdichtbare Kabeleinführungsöffnungen 15 zur individuellen Abdichtung jeweils eines Kabels 16 auf.

Es sei darauf hingewiesen, dass die Anzahl der individuell abdichtbaren Kabeleinführungsöffnungen rein exemplarischer Natur ist. Selbstverständlich kann ein erfindungsgemäßer Dichtungskörper im Bereich des mittleren Dichtungskörpersegments auch über weniger als sechs oder mehr als sechs Ausnehmungen zur Aufnahme jeweils eines zylindersegmentartigen Dichtungskörpersegments verfügen.

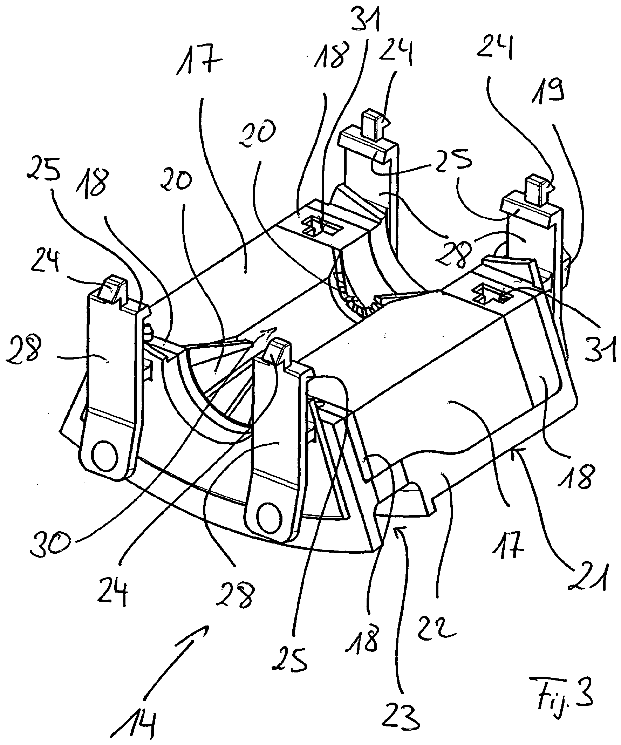

Jedes zylindersegmentartige Dichtungskörpersegment 14 (siehe insbesondere Fig. 3) verfügt über ein gelartiges Dichtungselement 17, welches zwischen zwei sogenannten Federscheiben 18 angeordnet ist. Das gelartige Dichtungselement 17 jedes zylindersegmentartigen Dichtungskörpersegments 14 verfügt über eine nutartige Ausnehmung 30, in die ein abzudichtendes Kabel 16 eingelegt werden kann.

Über ein Druckelement 19, welches im gezeigten Ausführungsbeispiel als Stellschraube ausgebildet ist, kann im gezeigten Ausführungsbeispiel auf eine der Federscheiben 18 eine Kraft bzw. ein Druck ausgeübt werden, über welchen letztendlich das gelartige Dichtungselement 17 verformt bzw. komprimiert werden kann. Über das Druckelement 19 ist nämlich die Federscheibe 18, an welcher das Druckelement 19 angreift, relativ zur anderen Federscheibe 18 bewegbar, um so die auf das gelartige Dichtungselement 17 einwirkende Kraft bzw. den auf das gelartige Dichtungselement 17 einwirkenden Druck einzustellen. Jedes zylindersegmentartige Dichtungskörpersegment 14 verfügt über ein separates Druckelement 19 zur individuellen Komprimierung des jeweiligen gelartigen Dichtungselements 17.

Nach innen in die nutartige Ausnehmung 30 des gelartigen Dichtungselements 17 hineinragende Federelemente 20 der Federscheiben 18 zentrieren einerseits ein abzudichtendes Kabel 16, andererseits verhindern dieselben, dass das gelartige Dichtungselement 17 aus der jeweiligen Kabeleinführungsöffnung 15 abfließen kann.

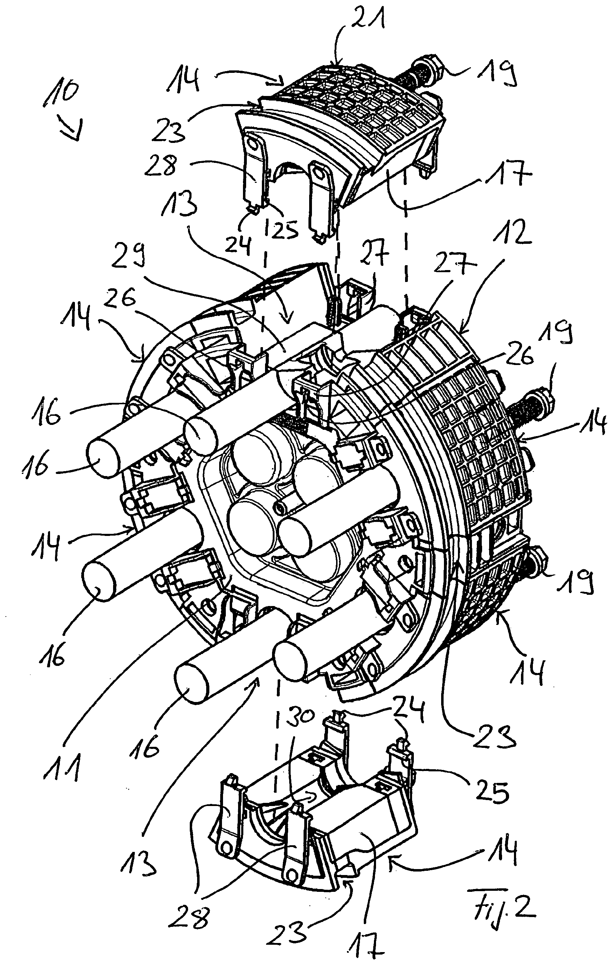

Im Bereich der Ausnehmungen 13 des mittleren Dichtungskörpersegments 11 sind vorzugsweise ebenfalls gelartige Dichtungselemente 29 (siehe Fig. 2) positioniert, die mit dem entsprechenden, gelartigen Dichtungselement 17 des in die Ausnehmung 13 einzuführenden, zylindersegmentartigen Dichtungskörpersegments 14 zusammenwirken. Auch die gelartigen Dichtungselemente 29 des mittleren Dichtungskörpersegments 11 verfügen über jeweils eine nutartige Ausnehmung, die letztendlich zusammen mit den nutartige Ausnehmungen der gelartigen Dichtungselement 17 der zylindersegmentartigen Dichtungskörpersegmente 14 die Kabeleinführungsöffnungen 15 definieren.

Die gelartigen Dichtungselemente 29 des mittleren Dichtungskörpersegments 11 wirken mit den gelartigen Dichtungselementen 17 der zylindersegmentartigen Dichtungskörpersegmente 14 derart zusammen, dass bei Komprimierung eines gelartigen Dichtungselements 17 eines zylindersegmentartigen Dichtungskörpersegments 14 über dessen Druckelement 19 auch das mit diesem gelartigen Dichtungselement 17 zusammenwirkende, gelartige Dichtungselement 29 komprimiert wird, wobei hierzu Vorsprünge einer dieses Dichtungselement 29 begrenzenden Federscheibe (nicht gezeigt) in Ausnehmungen 31 eines das gelartige Dichtungselements 17 begrenzenden Federscheibe 18 eingreifen. Auf diese Art und Wiese ist durch die Komprimierung eines gelartigen Dichtungselements 17 eines zylindersegmentartigen Dichtungskörpersegments 14 mit Hilfe des Druckelements 19 dieses zylindersegmentartigen Dichtungskörpersegments 14 indirekt auch das mit diesem gelartigen Dichtungselement 17 zusammenwirkende, gelartige Dichtungselement 29 komprimierbar.

Gemäß Fig. 3 ist das von den Federscheiben 18 an zwei sich gegenüberliegenden Seiten begrenzte, gelartige Dichtungselement 17 jedes zylindersegmentartigen Dichtungskörpersegments 14 zusammen mit den Federscheiben 18 in einem Gehäuse 22 des zylindersegmentartigen Dichtungskörpersegments 14 angeordnet. Das Gehäuse 22 jedes zylindersegmentartigen Dichtungskörpersegments 14 begrenzt eine radial außen liegende Oberfläche 21 desselben und ist ebenso wie das Gehäuse des mittleren Dichtungskörpersegments formstabil.

Dann, wenn wie Fig. 1 zeigt, der erfindungsgemäße Dichtungskörper 10 zusammengebaut ist und demnach die zylindersegmentartigen Dichtungskörpersegmente 14 vollständig in die Ausnehmungen 13 des mittleren Dichtungskörpersegments 11 eingeführt sind, ergänzen die Oberflächen 21 des Gehäuses 22 der zylindersegmentartigen Dichtungskörpersegmente 14 die durch die Ausnehmungen 13 unterbrochene Mantelfläche 12 des mittleren Dichtungskörpersegments 11 und damit das Gehäuse desselben.

Gemäß Fig. 1 sind sowohl in die äußere Oberfläche 21 des Gehäuses 22 der zylindersegmentartigen Dichtungskörpersegmente 14 als auch in die Mantelfläche 12 des mittleren Dichtungskörpersegments 11 nutartige Ausnehmungen eingebracht, die sich im in Fig. 1 dargestellten, zusammengebauten Zustand des Dichtungskörpers 10 unter Ausbildung einer in Umfangsrichtung umlaufenden, nutartigen Ausnehmung 23 ergänzen, in die zur Abdichtung des erfindungsgemäßen Dichtungskörpers 10 gegenüber einem nicht-dargestellten Abdeckkörper einer Kabelmuffe ein ebenfalls nicht-dargestellter Dichtungskörper eingelegt werden kann.

Wie insbesondere Fig. 2 entnommen werden kann, können die zylindersegmentartigen Dichtungskörpersegmente 14 in radialer Richtung des Dichtungskörpers 10 in die Ausnehmungen 13 des mittleren Dichtungskörpersegments 11 eingeführt werden.

Bei der Montage der zylindersegmentartigen Dichtungskörpersegmente 14 in den Ausnehmungen 13 des mittleren Dichtungskörpersegments 11 wirken dabei Verbindungselemente der zylindersegmentartigen Dichtungskörpersegmente 14 mit Verbindungselementen des mittleren Dichtungskörpersegments 11 zusammen. So verfügt jedes zylindersegmentartige Dichtungskörpersegment 14 über zwei unterschiedliche Verbindungselemente, nämlich erste Verbindungselemente 24 und zweite Verbindungselemente 25.

Die ersten Verbindungselemente 24 jedes zylindersegmentartigen Dichtungskörpersegments 14 sind dabei als Rastnasen bzw. Schnapphaken ausgebildet, die mit entsprechend konturierten Ausnehmungen 26 von Verbindungselementen 27 des mittleren Dichtungskörpersegments 11 derart zusammenwirken, dass die zylindersegmentartigen Dichtungskörpersegmente 14 im Bereich der Ausnehmungen 13 unverlierbar am mittleren Dichtungskörpersegment 11 vormontiert werden können. Dabei begrenzen die ersten Verbindungselemente 24 der zylindersegmentartigen Dichtungskörper 14 zusammen mit den Ausnehmungen 26 der Verbindungselemente 27 des mittleren Dichtungskörpersegments 11 die radiale Verstellbarkeit der zylindersegmentartigen Dichtungskörpersegmente 14 gegenüber dem mittleren Dichtungskörpersegment 11 nach radial außen.

Dann, wenn die zylindersegmentartigen Dichtungskörpersegmente 14 gegenüber dem mittleren Dichtungskörpersegment 11 maximal nach radial außen verstellt sind, greifen die ersten Verbindungselemente 24 der zylindersegmentartigen Dichtungskörpersegmente 14 in die Ausnehmungen 26 der Verbindungselemente 27 des mittleren Dichtungskörpersegments 11 ein und erleichtern die Einführung eines Kabels 16 in die entsprechende Kabeleinführungsöffnung 15.

Nach Einlegen eines Kabels 16 in die Kabeleinführungsöffnung 15 ist dann das entsprechende zylindersegmentartige Dichtungskörpersegment 14 nach radial innen verschiebbar, wobei dann zur Fixierung des zylindersegmentartigen Dichtungskörpersegments 14 in der jeweiligen Ausnehmung 13 des mittleren Dichtungskörpersegments 11 die zweiten Verbindungselemente 25, die ebenfalls als Rastnasen bzw. Schnapphaken ausgebildet sind, in entsprechend konturierte Hinterschnitte der Verbindungselemente 27 des mittleren Dichtungskörpersegments 11 eingreifen. Diese Hinterschnitte sind in Fig. 1 und 2 nicht dargestellt, dieselben sind jedoch gegenüber den Ausnehmungen 26 der Verbindungselemente 27 nach radial innen versetzt.

Im gezeigten Ausführungsbeispiel verfügt jedes zylindersegmentartige Dichtungskörpersegment 14 über insgesamt vier erste Verbindungselemente 24 sowie vier zweite Verbindungselemente 25, die an vier sich in radialer Richtung erstreckenden, am Gehäuse 22 angreifenden Stegen 28 ausgebildet sind. An jedem der Stege 28 ist dabei ein erstes Verbindungselement 24 und ein zweites Verbindungselement 25 ausgebildet, die an den entsprechenden Stegen 28 jeweils in entgegengesetzte Richtungen zeigen bzw. wirken.

Der erfindungsgemäße Dichtungskörper 11 verfügt demnach über ein mittleres, zylinderartiges Dichtungskörpersegment 11 sowie mehrere zylindersegmentartigen Dichtungskörpersegmente 14, die in radialer Richtung in Ausnehmungen 13 des mittleren Dichtungskörpersegments 11 eingeführt werden können. Zwischen jedem zylindersegmentartigem Dichtungskörpersegment 14 und dem mittleren Dichtungskörpersegment 11 wird dabei eine Kabeleinführungsöffnung 15 ausgebildet, die der Aufnahme und individuellen Abdichtung eines einzigen Kabels 16 dient.

Jedes zylindersegmentartige Dichtungskörpersegment 14 verfügt über ein gelartiges Dichtungselement 17, welches individuell komprimiert bzw. verformt werden kann. Hierzu dienen den zylindersegmentartigen Dichtungskörpersegmenten 14 zugeordnete Druckelemente 19, über welches auf die gelartigen Dichtungselemente 17 jedes zylindersegmentartigen Dichtungskörpersegments 14 eine individuelle Kraft bzw. ein individueller Druck zur individuellen Verformung desselben ausgeübt werden kann. Mit den gelartigen Dichtungselementen 17 der zylindersegmentartigen Dichtungskörpersegmenten 14 wirken in den Ausnehmungen 13 des mittleren Dichtungskörpersegments 11 angeordnete, gelartige Dichtungselementen 29 zusammen. Diese gelartigen Dichtungselemente 29 sind indirekt über die Druckelemente 19 der zylindersegmentartigen Dichtungskörpersegmenten 14 komprimierbar.

Die Verbindungselemente 24 und 25 der zylindersegmentartigen Dichtungskörpersegmente 14 ermöglichen eine einfache Montage derselben am mittleren Dichtungskörpersegment 11, wobei erste Verbindungselemente 24 der unverlierbaren Vormontage der zylindersegmentartigen Dichtungskörpersegmente 14 am mittleren Dichtungskörpersegment 11 dienen, und wobei zweite Verbindungselemente 25 die zylindersegmentartigen Dichtungskörpersegmente 14 in der Endmontageposition am mittleren Dichtungskörpersegment 11 fixieren.

Ein wesentlicher Vorteil des erfindungsgemäßen Dichtungskörpers 10 liegt unter anderem darin, dass alle Kabel individuell abgedichtet werden können. Soll z. B. im Bereich eines zylindersegmentartigen Dichtungskörpersegments 14 die Abdichtung eines Kabels 16 verändert bzw. ein Kabel 16 erstmals in die entsprechende Kabeleinführungsöffnung 15 eingeführt werden, so müssen hierzu die Abdichtungen anderer Kabel im Bereich anderer zylindersegmentartiger Dichtungskörpersegmente 14 nicht gelöst werden. Hierdurch kann der zur Abdichtung eines Kabels 16 benötigte Aufwand deutlich reduziert werden.

### Bezugszeichenliste

- 10: Dichtungskörper
- 11: mittleres Dichtungskörpersegment
- 12: Mantelfläche
- 13: Ausnehmung
- 14: zylindersegmentartiges Dichtungskörpersegment
- 15: Kabeleinführungsöffnung
- 16: Kabel
- 17: gelartiges Dichtungselement
- 18: Federscheiben
- 19: Druckelement
- 20: Federelement
- 21: Oberfläche
- 22: Gehäuse
- 23: nutartige Ausnehmung
- 24: erstes Verbindungselement
- 25: zweites Verbindungselement
- 26: Ausnehmung
- 27: Verbindungselement
- 28: Steg
- 29: gelartiges Dichtungselement
- 30: Ausnehmung
- 31: Ausnehmung

## Patentansprüche

1. Dichtungskörper einer Kabelmuffe,
mit mehreren Dichtungskörpersegmenten (11, 14), die über Verbindungselemente miteinander verbindbar sind,
wobei zwischen aneinadergrenzenden Dichtungskörpersegmenten Kabeleinführungsöffnungen (15) ausgebildet sind,
wobei im Bereich der Kabeleinführungsöffnungen (15) gelartige Dichtungselemente angeordnet sind, die unter Abdichtung von in die Kabeleinführungsöffnungen einlegbaren Kabeln komprimierbar sind,
wobei ein mittleres, zylinderartiges Dichtungskörpersegment (11) an einer äußeren Mantelfläche (12) über den Umfang derselben verteilt mehrere Ausnehmungen (13) aufweist,
wobei in jede der Ausnehmungen (13) des mittleren Dichtungskörpersegments (11) jeweils ein zylindersegmentartiges Dichtungskörpersegment (14) in radialer Richtung des mittleren Dichtungskörpersegments (11) einführbar ist,
wobei zwischen dem mittleren Dichtungskörpersegment (11) und jedem zylindersegmentartigen Dichtungskörpersegment (14) jeweils eine Kabeleinführungsöffnung (15) zur Aufnahme und Abdichtung jeweils eines einzigen Kabels (16) ausgebildet ist, und
wobei jedes zylindersegmentartige Dichtungskörpersegment (14) ein gelartiges Dichtungselement (17) aufweist,
wobei jedes zylindersegmentartige Dichtungskörpersegment (14) mehrere Verbindungselemente aufweist, die mit Verbindungselementen des mittleren Dichtungskörpersegments (11) zusammenwirken,
wobei zweite Verbindungselemente (25) der Verbindungselemente jedes zylindersegmentartigen Dichtungskörpersegments (14) als Rastnasen bzw. Schnapphaken ausgebildet sind, die in entsprechend konturierte Ausnehmungen bzw. Hinterschnitte der Verbindungselemente (27) des mittleren Dichtungskörpersegments (11) eingreifen, wobei über diese zweiten Verbindungselemente (25) jedes zylindersegmentartige Dichtungskörpersegment (14) am mittleren Dichtungskörpersegment (11) derart montierbar ist, dass eine Endmontageposition desselben relativ zum mittleren Dichtungskörpersegment (11) fixiert ist,
**dadurch gekennzeichnet, dass**
das gelartige Dichtungselement (17) jedes zylindersegmentartigen Dichtungskörpersegment (14) unabhängig von den Dichtungselementen (17) anderer zylindersegmentartiger Dichtungskörpersegmente (14) über ein individuelles Druckelement (19) individuell komprimierbar ist, um das in die jeweilige Kabeleinführungsöffnung (15) einlegbare Kabel individuell abzudichten;
erste Verbindungselemente (24) der Verbindungselemente jedes zylindersegmentartigen Dichtungskörpersegments (14) als Rastnasen bzw. Schnapphaken ausgebildet sind, die in entsprechend konturierte Ausnehmungen (26) bzw. Hinterschnitte der Verbindungselemente (27) des mittleren Dichtungskörpersegments (11) eingreifen, wobei über diese ersten Verbindungselemente (24) jedes zylindersegmentartige Dichtungskörpersegment (14) unverlierbar am mittleren Dichtungskörpersegments (11) derart vormontierbar ist, dass dasselbe relativ zum mittleren Dichtungskörpersegments (11) in radialer Richtung verstellbar ist, um die Einführung eines Kabels in die entsprechende Kabeleinführungsöffnung (15) zu erleichtern;
die ersten Verbindungselemente (24) und die zweiten Verbindungselemente (25) jedes zylindersegmentartigen Dichtungskörpersegments (11) an sich in radialer Richtung erstreckenden, an einem Gehäuse (22) des jeweiligen zylindersegmentartigen Dichtungskörpersegments (11) angreifenden Stegen (28) ausgebildet sind, wobei an jedem der Stege (28) jeweils ein erstes Verbindungselement (24) und ein zweites Verbindungselement (25) ausgebildet ist, die an dem jeweiligen Steg (28) in entgegengesetzte Richtungen zeigen.

2. Dichtungskörper nach Anspruch 1, **dadurch gekennzeichnet, dass** das mittlere Dichtungskörpersegment (11) im Bereich jeder Ausnehmung (13) ein gelartiges Dichtungselement (29) aufweist, welches mit dem gelartigen Dichtungselement (17) des entsprechenden zylindersegmentartigen Dichtungskörpersegments (14) zusammenwirkt.

3. Dichtungskörper nach Anspruch 1 oder 2, **dadurch gekennzeichnet, dass** die Ausnehmungen (13) des mittleren Dichtungskörpersegments (11), die der Aufnahme jeweils eines zylindersegmentartigen Dichtungskörpersegments (14) und der individuellen Abdichtung jeweils eines Kabels dienen, über den Umfang des mittleren Dichtungskörpersegments (11) gleichverteilt angeordnet sind.

4. Dichtungskörper nach einem oder mehreren der Ansprüche 1 bis 3, **dadurch gekennzeichnet, dass** eine äußere Oberfläche (21) der zylindersegmentartigen Dichtungskörpersegmente (14) die durch die Ausnehmungen (13) unterbrochene Mantelfläche (12) des mittleren Dichtungskörpersegment (11) in einer Endmontageposition ergänzen.

5. Dichtungskörper nach Anspruch 4, **dadurch gekennzeichnet, dass** in die äußere Oberfläche (21) der zylindersegmentartigen Dichtungskörpersegmente (14) und in die Mantelfläche (12) des mittleren Dichtungskörpersegments (11) nutartige Ausnehmungen (23) eingebracht sind, die sich in der Endmontageposition ergänzen und in die ein Dichtungselement einlegbar ist, um den Dichtungskörper gegenüber einem Abdeckkörper einer Kabelmuffe abzudichten.

## Claims

1. Sealing body for a cable sleeve,
with a plurality of sealing body segments (11, 14), which can be connected to one another via connecting elements,
cable insertion openings (15) being formed between adjoining sealing body segments,
gel-like sealing elements being arranged in the region of the cable insertion openings (15), which sealing elements can be compressed so as to seal off cables which can be inserted into the cable insertion openings,
a central, cylindrical sealing body segment (11) having, on an outer casing surface (12), a plurality of cutouts (13) distributed over the circumference thereof,
in each case one cylinder-segment-like sealing body segment (14) being able to be inserted into each of the cutouts (13) of the central sealing body segment (11) in the radial direction of the central sealing body segment (11),
in each case one cable insertion opening (15) for receiving and sealing off in each case one single cable (16) being formed between the central sealing body segment (11) and each cylinder-segment-like sealing body segment (14), and
each cylinder-segment-like sealing body segment (14) having a gel-like sealing element (17),
each cylinder-segment-like sealing body segment (14) having a plurality of connecting elements, which interact with connecting elements of the central sealing body segment (11),
second connecting elements (25) of the connecting elements of each cylinder-segment-like sealing body segment (11) being in the form of latching tabs or snap-action hooks, which engage in correspondingly contoured cutouts or recesses of the connecting elements (27) of the central sealing body segment (11), each cylinder-segment-like sealing body segment (14) being capable of being fitted on the central sealing body segment (11) via these second connecting elements (25) in such a way that a final assembled position thereof is fixed relative to the central sealing body segment (11),
**characterized in that**
the gel-like sealing element (17) of each cylinder-segment-like sealing body segment (14) can be compressed individually independently of the sealing elements (17) of other cylinder-segment-like sealing body segments (14) via an individual pressure element (19) in order to individually seal off the cable which can be inserted into the respective cable insertion opening (15);
first connecting elements (24) of the connection elements of each cylinder-segment-like sealing body segment (14) are in the form of latching tabs or snap-action hooks, which engage in correspondingly contoured cutouts (26) or recesses of the connecting elements (27) of the central sealing body segment (11), each cylinder-segment-like sealing body segment (14) being capable of being prefitted on the central sealing body segment (11) via these first connecting elements (24) in such a way that it cannot become detached and in such a way that it is capable of being moved in the radial direction relative to the central sealing body segment (11) in order to facilitate the insertion of a cable into the corresponding cable insertion opening (15);
the first connecting elements (24) and the second connecting elements (25) of each cylinder-segment-like sealing body segment (11) are formed on webs (28) which extend in the radial direction and which act on a housing (22) of the respective cylinder-segment-like sealing body segment (11), wherein in each case one first connecting element (24) and one second connecting element (25) is formed on each of the webs (28), which connecting elements point in opposite directions on the respective web (28).

2. Sealing body according to Claim 1, **characterized in that** the central sealing body segment (11) has, in the region of each cutout (13), a gel-like sealing element (29), which interacts with the gel-like sealing element (17) of the corresponding cylinder-segment-like sealing body segment (14).

3. Sealing body according to Claim 1 or 2, **characterized in that** the cutouts (13) of the central sealing body segment (11), which are used for receiving in each case one cylinder-segment-like sealing body segment (14) and individually sealing off in each case one cable, are arranged evenly distributed over the circumference of the central sealing body segment (11).

4. Sealing body according to one or more of Claims 1 to 3, **characterized in that** an outer surface (21) of the cylinder-segment-like sealing body segments (14) complements the casing surface (12), which is interrupted by the cutouts (13), of the central sealing body segment (11) in a final assembled position.

5. Sealing body according to Claim 4, **characterized in that** groove-like cutouts (23) are introduced into the outer surface (21) of the cylinder-segment-like sealing body segments (14) and into the casing surface (12) of the central sealing body segment (11), which cutouts (23) complement one another in the final assembled position and into which cutouts a sealing element can be inserted in order to seal off the sealing body with respect to a covering body of a cable sleeve.

## Revendications

1. Organe d'étanchéité d'un manchon de câble,
pourvu de plusieurs segments d'organe d'étanchéité (11, 14), qui par l'intermédiaire d'éléments d'assemblage sont susceptibles d'être assemblés les uns aux autres,
entre des segments d'organe d'étanchéité contigus étant conçus des orifices d'introduction de câbles (15),
dans la zone des orifices d'introduction de câbles (15) étant placés des éléments d'étanchéité sous forme de gel, qui sont compressibles tout en assurant l'étanchéité de câbles insérables dans les orifices d'introduction de câbles,
un segment d'organe d'étanchéité (11) central de forme cylindrique comportant sur une surface d'enveloppe (12) extérieure plusieurs évidements (13) distribués sur la périphérie de celle-ci,
dans chacun des évidements (13) du segment d'organe d'étanchéité (11) central, un segment d'organe d'étanchéité (14) en forme de segment de cylindre étant respectivement insérable en direction radiale du segment d'organe d'étanchéité (11) central,
entre le segment d'organe d'étanchéité (11) central et chaque segment d'organe d'étanchéité (14) en forme de segment de cylindre étant conçu respectivement un orifice d'introduction de câbles (15), destiné à recevoir et à assurer l'étanchéité à chaque fois d'un seul câble (16) et
chaque segment d'organe d'étanchéité (14) en forme de segment de cylindre comportant un élément d'étanchéité (17) sous forme de gel,
chaque segment d'organe d'étanchéité (14) en forme de segment de cylindre comportant plusieurs éléments d'assemblage qui coopèrent avec des éléments d'assemblage du segment d'organe d'étanchéité (11) central,
des deuxièmes éléments d'assemblage (25) des éléments d'assemblage de chaque segment d'organe d'étanchéité (11) en forme de segment de cylindre étant conçus sous la forme de tenons d'enclenchement ou de crochets d'encliquetage qui s'engagent dans des évidements ou contre-dépouilles de contour correspondant des éléments d'assemblage (27) du segment d'organe d'étanchéité (11) central, par l'intermédiaire desdits deuxièmes éléments d'assemblage (25), chaque segment d'organe d'étanchéité (14) en forme de segment de cylindre étant susceptible d'être monté sur le segment d'organe d'étanchéité (11) central, de telle sorte qu'une position de montage finale de celui-ci par rapport au segment d'organe d'étanchéité (11) central soit fixée,
**caractérisé en ce que**
l'élément d'étanchéité (17) sous forme de gel de chaque segment d'organe d'étanchéité (14) en forme de segment de cylindre est individuellement compressible indépendamment des éléments d'étanchéité (17) d'autres segments d'organe d'étanchéité (14) en forme de segments de cylindre par l'intermédiaire d'un élément de pression (19) individuel, pour assurer individuellement l'étanchéité du câble insérable dans l'orifice d'introduction de câbles (15) respectif ;
des premiers éléments d'assemblage (24) des éléments d'assemblage de chaque segment d'organe d'étanchéité (14) en forme de segment de cylindre sont conçus sous la forme de tenons d'enclenchement ou de crochets d'encliquetage qui s'engagent dans des évidements (26) ou contre-dépouilles à contour correspondant des éléments d'assemblage (27) du segment d'organe d'étanchéité (11) central, par l'intermédiaire desdits premiers éléments d'assemblage (24), chaque segment d'organe d'étanchéité (14) en forme de segment de cylindre étant susceptible d'être préalablement monté de manière imperdable sur le segment d'organe d'étanchéité (11) central, de telle sorte qu'i soit ajustable en direction radiale, par rapport au segment d'organe d'étanchéité (11) central, pour faciliter l'introduction d'un câble dans l'orifice d'introduction de câbles (15) correspondant ;
les premiers éléments d'assemblage (24) et les deuxièmes éléments d'assemblage (25) de chaque segment d'organe d'étanchéité (11) en forme de segment de cylindre sont conçus sur des listels (28) s'étendant en direction radiale, s'engageant sur un boîtier (22) du segment d'organe d'étanchéité (11) en forme de segment de cylindre respectif, sur chacun des listels (28) étant conçus respectivement un premier élément d'assemblage (24) et un deuxième élément d'assemblage (25), qui sur le listel (28) respectif sont orientés dans des directions opposées.

2. Organe d'étanchéité selon la revendication 1, **caractérisé en ce que** le segment d'organe d'étanchéité (11) central comporte dans la zone de chaque évidement (13) un élément d'étanchéité (29) sous forme de gel, qui coopère avec l'élément d'étanchéité (17) sous forme de gel du segment d'organe d'étanchéité (14) en forme de segment de cylindre correspondant.

3. Organe d'étanchéité selon la revendication 1 ou 2, **caractérisé en ce que** les évidements (13) du segment d'organe d'étanchéité (11) central qui servent à recevoir à chaque fois un segment d'organe d'étanchéité (14) en forme de segment de cylindre et à assurer individuellement l'étanchéité de chaque fois à d'un câble sont placés en distribution égale sur la périphérie du segment d'organe d'étanchéité (11) central.

4. Organe d'étanchéité selon l'une quelconque ou plusieurs des revendications 1 à 3, **caractérisé en ce qu'**une surface (21) extérieure des segments d'organe d'étanchéité (14) en forme de segments de cylindre complète la surface d'enveloppe (12), interrompue par les évidements (13), du segment d'organe d'étanchéité (11) central dans une position de montage finale.

5. Organe d'étanchéité selon la revendication 4, **caractérisé en ce que** dans la surface (21) extérieure des segments d'organe d'étanchéité (14) en forme de segments de cylindre et dans la surface d'enveloppe (12) du segment d'organe d'étanchéité (11) central sont ménagés des évidements (23) en forme de rainures, qui se complètent dans la position de montage finale et dans lesquels est insérable un élément d'étanchéité, pour assurer l'étanchéité de l'organe d'étanchéité par rapport à un organe de recouvrement du manchon de câble.
